# EUROPEAN PATENT SPECIFICATION

(11) **EP 2 751 668 B1**
(45) Date of publication and mention of the grant of the patent: **01.08.2018**
(21) Application number: 12784087.4
(22) Date of filing: 17.09.2012
(51) Int. Cl.: G06F 9/38, G06F 9/30, G06F 15/80

(54) **DIGITAL SIGNAL PROCESSOR AND BASEBAND COMMUNICATION DEVICE**
DIGITALER SIGNALPROZESSOR UND BASISBANDKOMMUNIKATIONSVORRICHTUNG
PROCESSEUR DE SIGNAL NUMÉRIQUE ET DISPOSITIF DE COMMUNICATION EN BANDE DE BASE

(30) Priority: 18.10.2011 SE 1150966
(43) Date of publication of application: 09.07.2014
(73) Proprietor: MediaTek Sweden AB, 583 30 Linköping (SE)
(72) Inventor: NILSSON, Anders, S-58247 Linköping (SE)
(74) Representative: Fenix Legal KB
(86) International application number: PCT/SE2012/050979
(87) International publication number: WO 2013/058695

(56) References cited:
- EP-A1- 0 042 442
- US-A- 5 179 530
- US-A1- 2007 255 894
- BHANDARKAR D ET AL: "Vector extensions to the VAX architecture", COMPUTER SOCIETY INTERNATIONAL CONFERENCE (COMPCON). SPRING MEETING, LOS ALAMITOS, FEB. 26 - MAR. 2, 1990; [COMPUTER SOCIETY INTERNATIONAL CONFERENCE (COMPCON)], LOS ALAMITOS, IEEE COMP. SOC. PRESS, US, 26 February 1990 (1990-02-26), pages 120-126, XP032144406, DOI: 10.1109/CMPCON.1990.63663 ISBN: 978-0-8186-2028-7

## Description

### Technical Field

The present invention relates to a SIMT-based digital signal processor.

### Background and Related Art

Many mobile communication devices use a radio transceiver that includes one or more digital signal processors (DSP).

For increased performance and reliability many mobile terminals presently use a type of DSP known as a baseband processor (BBP), for handling many of the signal processing functions associated with processing of the received the radio signal and preparing signals for transmission. It is advantageous to separate such functions from the main processor, as they are highly timing dependent, and may require a realtime operating system. There is a desire that such baseband processors should be as flexible as possible to adapt to developing standards and enable hardware reuse. Therefore, programmable baseband processors, PBBP have been developed.

Many of the functions frequently performed in such processors are performed on large numbers of data samples. Therefore a type of processor known as Single Instruction Multiple Data (SIMD) processor is useful because it enables one single instruction to operate on multiple data items, rather than on one data item at a time.

As a further development of SIMD architecture, the Single Instruction stream Multiple Tasks (SIMT) architecture has been developed. Traditionally in the SIMT architecture one or two SIMD type vector execution units have been provided in association with an integer execution unit which may be part of a core processor.

International Patent Application WO 2007/018467 discloses a DSP according to the SIMT architecture, having a processor core including an integer processor and a program memory, and two vector execution units which are connected to, but not integrated in the core. The vector execution units may be Complex Arithmetic Logic Units (CALU) or Complex Multiply-Accumulate Units (CMAC). The core has a program memory for distributing instructions to the execution units. In WO2007/018467 each of the vector execution units has a separate instruction decoder. This enables the use of the vector execution units independently of each other, and of other parts of the processor, in an efficient way.

Typically, the instruction set architecture for the SIMT processor may include three classes of compound instructions.
- RISC instructions, which operate on 16-bit integer operands. The RISC-instruction class includes most of the control-oriented instructions and may be executed within integer execution unit of the processor core.
- DSP instructions, which operate on complex- valued data having a real portion and an imaginary portion. The DSP instructions may be executed on one or more of the SIMD clusters.
- Vector instructions. Vector instructions may be considered extensions of the DSP instructions since they operate on large data sets and may utilize advanced addressing modes and vector support.

The SIMT architecture therefore offers both the performance of task-level and SIMD vector computing and sufficient RISC control flexibility at the same time.

In a SIMT architecture therefore, there are several execution units. Normally, one instruction may be issued from program memory to one of the execution units every clock cycle. Since vector operations typically operate on large vectors, an instruction received in one vector execution unit during one clock cycle will take a number of clock cycles to be processed. In the following clock cycles, therefore, instructions may be issued to other computing units of the processor. Since vector instructions run on long vectors, many RISC instructions may be executed concurrently with the vector operation.

Many baseband algorithms may be decomposed into chains of smaller baseband tasks with little backward dependencies between tasks. This property may not only allow different tasks to be performed in parallel on vector execution units, it may also be exploited using the above instruction set architecture.

Often, to provide control flow synchronization and to control the data flow, "idle" instructions may be used to halt the control flow until a given vector operation is completed. The "idle" instruction will halt further instruction fetching until a particular condition is fulfilled. Such condition can be the completion of a vector instruction in a vector execution unit.

Typically a DSP task will comprise a sequence of one to ten instructions, as will be discussed in more detail later. This means that the vector execution unit will receive a vector instruction, say, to perform a calculation, and execute it on the data vector provided until it is done with the entire vector. The next instruction will be to process the result and store it in memory, which can theoretically happen immediately after the calculation has been performed on the whole vector. Often, however, a vector execution unit has to wait several clock cycles for its next instruction from the program memory as the processor core is busy waiting for other vector units to complete, which leads to inefficient utilization of the vector execution unit. This probability that a vector execution unit is kept inactive increases with the increasing number of vector execution units in a system. EP 0042442 relates to an information processing system comprising a scalar arithmetic unit and a vector arithmetic unit for execution of vector instructions.

### Summary of the Invention

It is an objective of the present invention to make the processing of vector instructions in a SIMT architecture more efficient.

This objective is achieved according to the present invention by a vector execution unit for use in a digital signal processor, said vector execution unit being arranged to execute instructions, including vector instructions that are to be performed on multiple data in the form of a vector, comprising a vector controller arranged to determine if an instruction is a vector instruction and, if it is, inform a count register arranged to hold the vector length, said vector controller being further arranged to control the execution of instructions, said vector execution unit being characterized in that it comprises a local queue arranged to receive at least a first and a second instruction from a program memory and to hold the second instruction in the local queue until a predefined condition is fulfilled, and that the vector controller comprises queue control means arranged to control the local queue.

Preferably, the vector controller controls the execution of instructions on the basis of an issue signal received from the core. Alternatively, the issue signal may be handled locally by the vector execution unit itself.

Because of the local queue provided for each vector execution unit a bundle of instructions comprising several instructions for one vector unit can be provided to the vector unit at one time. To enable synchronization of instructions in the local queue to the execution of vector instructions, an instruction, called the SYNC instruction is provided, which will pause the reading of instructions from the local queue, until a condition is fulfilled, typically that the data path is ready to receive and execute another instruction. These two features together enable a sequence of instructions to be sent to the vector execution unit at once, to be stored in the local queue and be processed in sequence in the vector execution unit so that as soon as the vector execution unit is done with one instruction it can start on the next. In this way each vector execution unit can work with a minimum of inactive time.

Hence, the processing according to the invention is made more efficient by increasing the parallelism in the processor, since vector execution units may work more independently of each other. The invention is based on the insight that in the prior art a vector execution unit which has finished a vector instruction often cannot receive the next instruction immediately, since all vector execution units receive their commands from the same queue, that is, the program memory in the processor core. This will happen when a vector execution unit is ready to receive a new command while the first command in the program memory is intended for another vector execution unit which is busy. In this case, no vector execution unit can receive a new command until the other vector execution unit is ready to receive its next command.

In a preferred embodiment, the vector execution unit further comprises
- An instruction register arranged to receive and store instructions
- An instruction decoder arranged to decode instructions stored in the instruction register
- A plurality of data paths controlled by the instruction decoder.

Preferably, the local queue is arranged to pause the reading of instructions until the data path is ready to receive and execute another instruction. This will optimize the queue handling in the vector instruction and the overall handling of instructions in the processor to which the vector execution unit belongs.

Preferably, the queue control means comprises a queue controller arranged to hold status information related to the queue, such as how full the queue is, and to control the sending of instructions from the local queue to the vector execution unit for execution. The queue controller may also be arranged to, if a new instruction is sent to the queue and the queue is full, to generate an error message.

The queue control means may be arranged to issue a specific signal instructing the local queue to pause the reading of instructions from the local queue until a specific condition is fulfilled, for example that the data path is ready to accept a new instruction.

Preferably, the vector controller is arranged to cause a signal to be sent to a program flow control unit of the digital signal processor to indicate that the unit is ready to accept a new instruction. The sending of this signal may be based on information sent from the instruction decoder to the vector controller about the instruction being executed at any given time. The signal can also be based on the number of instructions currently in the queue, for example, if there is room for more instructions in the queue.

The invention also relates to a digital signal processor comprising:
- a processor core including an integer execution unit configured to execute integer instructions; and
- at least a first and a second vector execution unit separate from and coupled to the processor core, wherein each vector execution unit is a vector execution unit according to the above;
- said digital signal processor comprising a program memory arranged to hold instructions for the first and second vector execution unit and issue logic for issuing instructions, including vector instructions, to the first and second vector execution unit.

Such a digital processor will enable more concurrent use of its vector execution units, as discussed above.

Typically, the program memory is arranged in the processor core and is also arranged to hold instructions for the integer execution unit.

The invention also relates to a baseband communication device suitable for multimode wired and wireless communication, comprising:
- A front-end unit configured to transmit and/or receive communication signals;
- A programmable digital signal processor coupled to the analog front-end unit, wherein the programmable digital signal processor is a digital signal processor according to the above.

In a preferred embodiment, the vector execution units referred to throughout this document are SIMD type vector execution units or programmable co-processors arranged to operate on vectors of data.

The local queue may be a First In First Out (FIFO) queue of desired length, for example 4 to 8 instructions. It may also be any other type of suitable queue.

The processor according to embodiments of this invention are particularly useful for Digital Signal Processors, especially baseband processors. The front-end unit may be an analog front-end unit arranged to transmit and/or receive radio frequency or baseband signals.

Such processors are widely used in different types of communication device, such as mobile telephones, TV receivers and cable modems. Accordingly, the baseband communication device may be arranged for communication in a cellular communications network, for example as a mobile telephone or a mobile data communications device. The baseband communication device may also be arranged for communication according to other wireless standards, such as Bluetooth or WiFi. It may also be a television receiver, a cable modem, WiFI modem or any other type of communication device that is able to deliver a baseband signal to its processor. It should be understood that the term "baseband" only refers to the signal handled internally in the processor. The communication signals actually received and/or transmitted may be any suitable type of communication signals, received on wired or wireless connections. The communication signals are converted by a front-end unit of the device to a baseband signal, in a suitable way.

### Brief Description of the Drawings

In the following the invention will be described in more detail, by way of example, and with reference to the appended drawings.
Fig. 1 is a system overview of a typical mobile terminal including a baseband processor.
Fig. 2 illustrates an example of the SIMT architecture.
Fig. 3 is a block diagram of the baseband processor according to an embodiment of the invention.
Fig. 4 is a diagram illustrating the instruction issue pipelines of one embodiment of the processor core of FIG. 2.
Fig. 5 illustrates the instruction issue logic in SIMT processors
Fig. 6 illustrates a SIMT unit according to the prior art
Fig. 7 illustrates a SIMT unit having the added features of a general embodiment of the invention
Fig. 8 illustrates a SIMT unit according to a preferred embodiment of the invention.
Fig. 9 illustrates the working principle of the local queue according to an embodiment of the invention.

### Detailed description of Embodiments

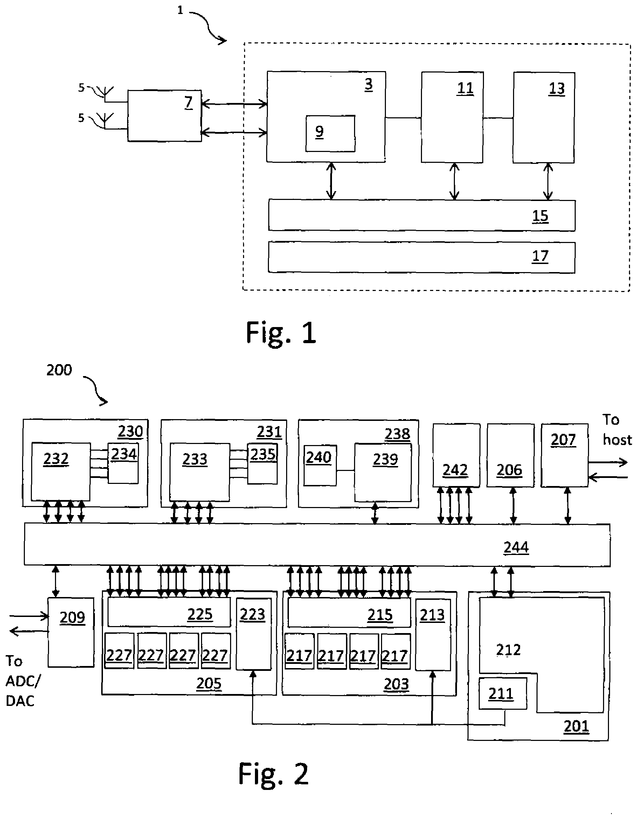

Figure 1 illustrates an example mobile terminal 1 comprising a baseband processor 3 which will be the main topic of this application. As is common in the art the terminal 1 comprises means for receiving and transmitting communication signals. In this example, this includes antennas 5 connected to an analog front end unit 7, comprising an analog to digital converter ADC for the receive direction and digital to analog converter DAC for the transmit direction. The analog front end unit 7 is connected to the baseband processor 3.The baseband processor 3 normally, but not necessarily comprises a Forward Error Correction (FEC) processor 9, for error correction functions such as interleaving, Viterbi decoding etc., as is common in the art. Typically, the baseband processor 3 is in turn connected to a MAC unit 11, which is in turn connected to an application processor 13.

Typically, but not necessarily, the terminal 1 has a bus and memory subsystem 15 interconnecting the baseband processor, the MAC unit 11 and the application processor 13. The terminal also comprises peripheral interfaces 17 for user input/output, typically including a keypad, a camera interface and interfaces for connections to other units, for example a USB interface.

As the person skilled in the art would realize, the analog front end may be arranged to handle any type of incoming and outgoing signals including radio frequency signals, baseband signals and other and to provide a baseband signal to the baseband processor 3.

Figure 2 illustrates an example of a baseband processor 200 according to the SIMT architecture. The processor 200 includes a controller core 201 and a first 203 and a second 205 vector execution unit, which will be discussed in more detail below. A FEC unit 206 as discussed in Figure 1 is connected to the on-chip network. In a concrete implementation, of course, the FEC unit 206 may comprise several different units.

A host interface unit 207 provides connection to the host processor shown in Fig. 1 (not shown in Fig. 2). If a MAC processor is present, as in Fig. 1, the MAC processor is connected between the host interface unit 207 and the host processor. A digital front end unit 209 provides connection to the ADC/DAC unit shown in Fig. 1 in a manner well known in the art.

As is common in the art, the controller core 201 comprises a program memory 211 as well as instruction issue logic and functions for multi-context support. For each execution context, or thread, supported this includes a program counter, stack pointer and register file (not shown explicitly in figure 2). Typically, 2-3 threads are supported.

The controller core 201 also comprises an integer execution unit 212 comprising a register file RF, a core integer memory ICM, a multiplier unit MUL and an Arithmetic and Logic/Shift Unit (ALSU). The ALSU may also be implemented as two units, Arithmetic Unit and Logic and Shift Unit. These units are known in the art and are not shown in Figure 2.

The first vector execution unit 203 in this example is a CMAC vector execution unit, comprising a vector controller 213, a vector load/store unit 215 and a number of data paths 217. The vector controller of this first vector execution unit is connected to the program memory 211 of the controller core 201 via the issue logic, to receive issue signals related to instructions from the program memory. In the description above, the issue logic decodes the instruction word to obtain the issue signal and sends this issue signal to the vector execution unit as a separate signal. It would also be possible to let the vector controller of the vector execution unit generate the issue signal locally. In this case, the issue signals are created by the vector controller based on the instruction word in the same way as it would be in the issue logic.

A second vector execution unit 205 is a CALU vector execution unit comprising a vector controller 223, a vector load/store unit 225 and a number of data paths 227. The vector controller 223 of this second vector execution unit is also connected to the program memory 211 of the controller core 201, via the issue logic, to receive issue signals related to instructions from the program memory.

The function of the data paths 217, 227 and the vector load/store units 215, 225 will be discussed below.

There could be an arbitrary number of vector execution units, including only CMAC units, only CALU units or a suitable number of each type. There may also be other types of vector execution unit than CMAC and CALU. As explained above, a vector execution unit is a processor that is able to process vector instructions, which means that a single instruction performs the same function to a number of data units. Data may be complex or real, and are grouped into bytes or words and packed into a vector to be operated on by a vector execution unit. In this document, CALU and CMAC units are used as examples, but it should be noted that vector execution units may be used to perform any suitable function on vectors of data.

To enable several concurrent vector operations, the processor preferably has a distributed memory system where the memory is divided into several memory banks, represented in Figure 2 by Memory bank 0 230 to Memory bank N 231. Each memory bank 230, 231 has its own complex memory 232, 233 and, address generation unit AGU 234, 235 respectively. This arrangement in conjunction with the on-chip network improves the power efficiency of the memory system and the throughput of the processor as multiple address calculations can be performed in parallel. The PBBP of Fig. 2 also includes one or more integer memory banks 238, including a memory 239 and an address generation unit 240.

As is known in the art, a number of accelerators 242 are typically connected, since they enable efficient implementation of certain baseband functions such as channel coding and interleaving. Such accelerators are well known in the art and will not be discussed in any detail here. The accelerators may be configurable to be reused by many different standards.

An on-chip network 244 connects the controller core 201, the digital front end unit 209, the host interface unit 207, the vector execution units 203, 205, the memory banks 230, 232, the integer bank 238 and the accelerators 242.

Each of the vector execution units 203, 205 comprises a vector load/store unit 215, 225 arranged to function as an interface between the network port and the data path in the vector execution unit. Typically, the execution units 203, 205 are connected to memory banks 230, 231 through the network 244, but connections to other units such as accelerators 242 and other vector execution units may also be supported. The load function is used for fetching data from the other units connected to the network 244 (for example from a memory bank) and the store function is used for storing data from the execution units 203, 205 to for example a memory unit 230, 231 through the network 244. Data may also be obtained from other vector execution units and/or the computing results may be forwarded to other vector execution units for further processing. Each vector execution unit also comprises a vector controller 213, 223 arranged to receive instructions from the program memory PM 211. The vector load units 215, 225 may load data using two different modes. In the first mode, multiple data items may be loaded from a bank of memories 230, 232 or other sources, as discussed above. In the other mode, data may be loaded one data item at a time and then distributed to the SIMD datapaths in a given execution unit. The latter mode may be used to reduce the number of memory accesses when consecutive data are processed by the execution unit.

In the illustrated embodiment, the second vector execution unit 205 is shown as a four-way complex ALU that may include four independent datapaths 227 each having a complex short multiplier-accumulator (CSMAC) as is common in the art. As will be described in greater detail below, CALU 205 may execute vector instructions. In one embodiment, CALU 205 may be particularly suited to execute complex vector instructions. Further, each of the independent datapaths 227 of CALU 205 may concurrently execute the complex vector instructions.

The first vector execution unit 203 is shown as a four-way CMAC with four complex datapaths that may be run concurrently or separately. The four complex data paths include multipliers, adders, and accumulator registers (all not shown in FIG. 2). Thus, in this embodiment, CMAC 203 may be referred to as a four-way CMAC datapath. In addition to multiplying and adding, CMAC 203 may also perform rounding and scaling operations and support saturation as is known in the art.

In one embodiment, CMAC 203 operations may be divided into multiple pipeline steps. In addition, each of the four complex data paths 217 may compute a complex multiplication and accumulation in one clock cycle. The CMAC 203 (i.e. the four data paths together) may execute an operation on an N-element vector in N/4 clock cycles, to support complex vector computing (e.g. complex convolution, conjugate complex convolution and complex vector dot product). Further, the CMAC 203 may also support operations on complex values stored in the accumulator registers (e.g., complex add, subtract, conjugate, etc). For example, CMAC 203, may compute a complex multiplication such as (AR + JAI)* (BR + JBI) in one clock cycle and complex accumulation in one clock cycle and support complex vector computing (e.g., complex convolution, conjugate complex convolution, and complex vector dot product).

In one embodiment, the instruction set architecture for processor core 201 may include three classes of compound instructions. The first class of instructions are RISC instructions, which operate on 16-bit integer operands. The RISC-instruction class includes most of the control-oriented instructions and may be executed within integer execution unit 212 of the processor core 201. The next class of instructions are DSP instructions, which operate on complex- valued data having a real portion and an imaginary portion. The DSP instructions may be executed on one or more of the vector execution units 203, 205. The third class of instructions are the Vector instructions. Vector instructions may be considered extensions of the DSP instructions since they operate on large data sets and may utilize advanced addressing modes and vector support. The vector instructions may operate on complex or real data types.

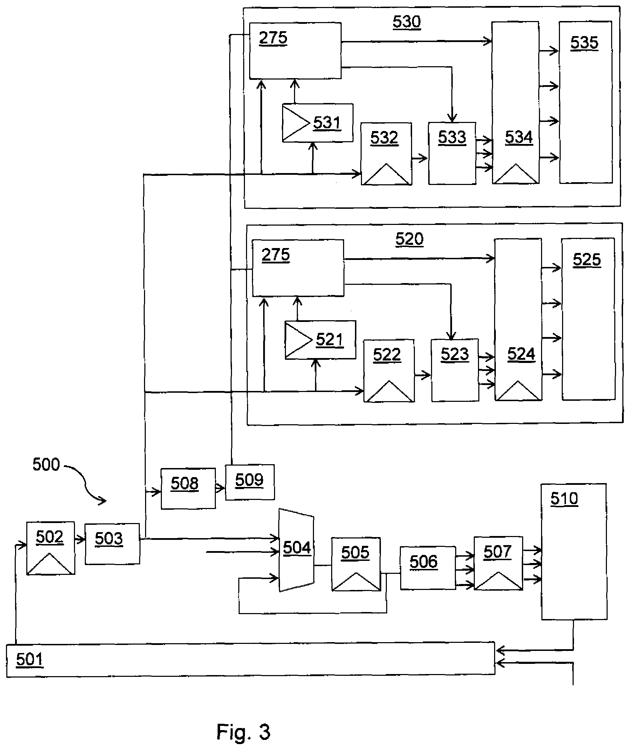

Fig. 3 is a block diagram of the baseband processor, PBBP 200, according to an embodiment of the invention. PBBP 200 includes a processor core which includes a RISC-type execution unit, and which is represented by RISC data path 510. PBBP further has a number of vector execution units 520, 530 each including a vector control unit 275 respectively and a SIMD datapath 525, 535, respectively. As is common in the art, each datapath 525, 535 may comprise several datapaths. Typically, for example, datapath 525 has four parallel CMAC datapaths which together constitute the datapath 525.

To provide control over the multiple vector execution units, the core hardware 500 includes a program flow control unit 501 coupled to a program counter 502 which is in turn coupled to program memory (PM) 503. PM 503 is coupled to multiplexer 504, unit- field extraction 508. Multiplexer 504 is coupled to instruction register 505, which is coupled to instruction decoder 506. Instruction decoder 506 is further coupled to control signal register (CSR) 507, which is in turn coupled to the remainder of the RISC datapath 510.

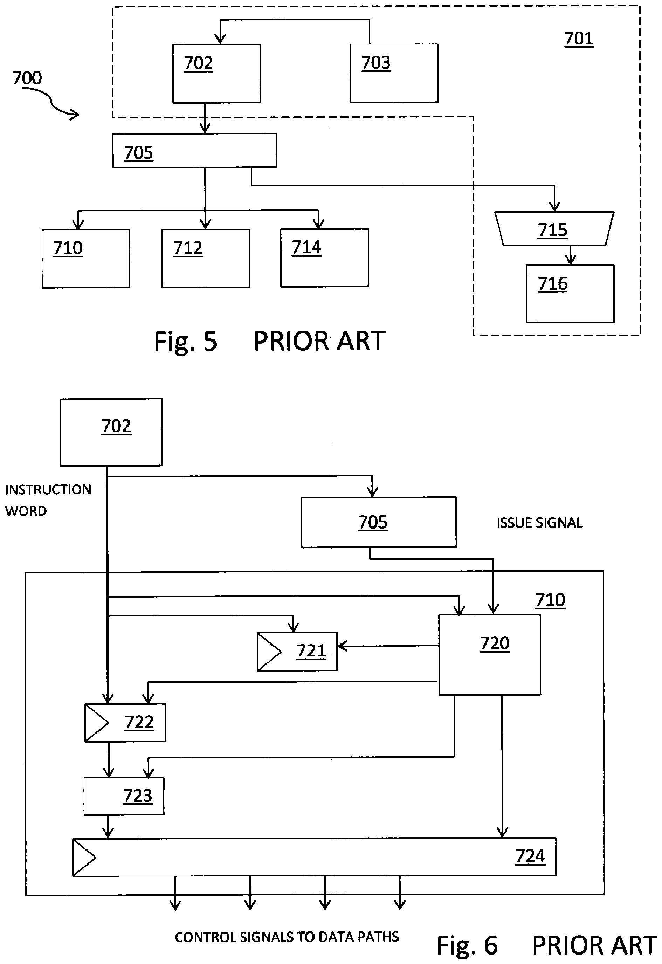

Similarly, each of the vector execution units 520 and 530 are also arranged to receive instructions from the program memory 503 located in the core. The vector execution units include respective vector length registers 521, 531, instruction registers 522, 532, instruction decoders 523, 533, and CSRs 524, 534, which are coupled to their respective data paths 525 and 535. These units and their functions will be discussed in more detail, insofar as they are relevant to the invention, in connection with Fig. 5.

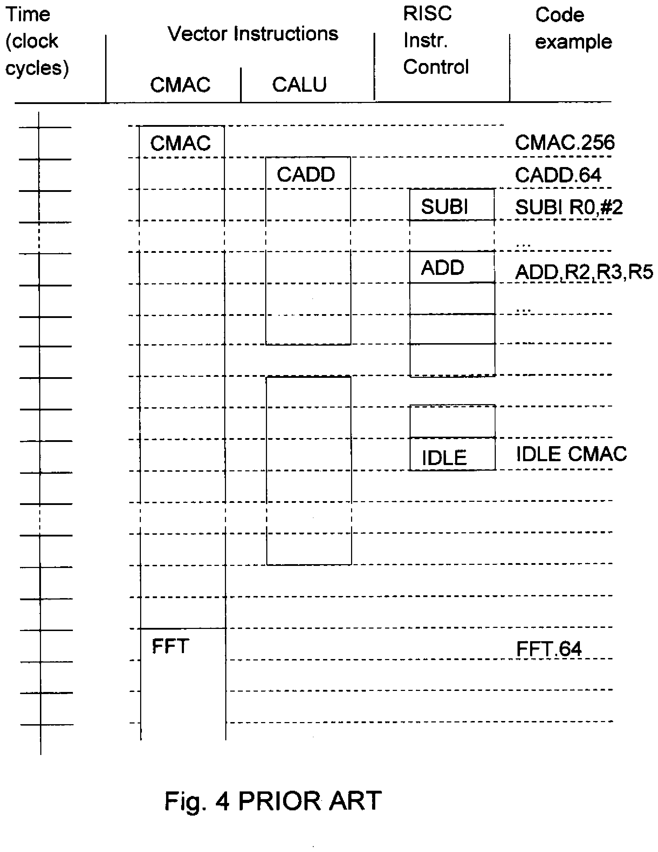

FIG. 4 is an example of prior art handling of instructions from the program memory to the various execution units, intended as an illustration of the underlying problem of the invention. The left column of FIG. 4 represents time (in execution clock cycles). The remaining columns represent, from left to right, the execution pipelines of a first and a second vector execution unit (more specifically, the datapaths of CMAC 203 and CALU 205) and the integer execution unit and the issuance of instructions thereto. More particularly, in the first clock cycle, a complex vector instruction (e.g., CMAC.256) is issued to CMAC 203. As shown, the vector instruction takes many cycles to complete. In the next clock cycle, a vector instruction is issued to CALU 205. In the next clock cycle, an integer instruction is issued to integer execution unit 510. In the next several cycles, while the vector instructions are being executed, any number of integer instructions may be issued to integer execution unit 510. It is noted that although not shown, the remaining vector execution units may also be concurrently executing instructions in a similar fashion.

In some cases an "idle" instruction may be included in the sequence of instructions, to stop the core program flow controller from fetching instructions from the program memory. For example, to synchronize the program flow to the completion of a vector instruction, the "idle" instruction may be used to suspend the fetching of instructions until a certain condition have been met. Typically, this condition will be that the vector execution unit concerned is done with a previous vector instruction and is able to receive a new instruction. In this case, the vector controller 275 of the vector execution unit 520. 530 concerned will send an indication, such as a flag, to the program flow controller 501 indicating that the vector execution unit is ready to receive another instruction.

Idle instructions may be used for more than one vector execution unit at the same time. In this case, no further instructions may be sent from the program memory 503 until each of the vector execution units 520, 530 concerned has sent a flag indicating that it is ready to receive a new instruction.

In the example in Fig. 4, the "idle" instruction is issued after the integer instructions mentioned above. The idle instruction is used in this example to halt the control flow until the vector operation performed by the CMAC 203 is completed.

The following example will be discussed on the basis of a SIMT DSP with an arbitrary number of execution units. For simplicity, all units are assumed in this example to be CMAC vector execution units, but in practice units of different types will be mixed and used together.

In many base band processing algorithms and programs, the algorithm can be decomposed into a number of DSP tasks, each consisting of a "prolog", a vector operation and an "epilog". The prolog is mainly used to clear accumulators, set up addressing modes and pointers and similar, before the vector operation can be performed. When the vector operation has completed, the result of the vector operation may be further processed by code in the "epilog" part of the task. In SIMT processors, typically only one vector instruction is needed to perform the vector operation.

The typical layout of one DSP task is exemplified by the following example task according to prior art:
The code snippet in the example performs a complex dot-product calculation over 512 complex values and then store the result to memory again. The routine requires the following instructions to be fetched by the processor core.

| | | |
|---|---|---|
| *cmac0* | *;Assume cmac0 is selected* | |
| | | |
| *prolog:* | *;Address setup* | |
| | *ldi #0, r0* | |
| | *out r0, cdm0_addr* | |
| | *out r0, cdm1_addr* | |
| | *out r0, cdm2_addr* | |
| | *setcmvl. 512* | *; Set vector length to 512* |
| | | |
| *vectorop:* | *cmac [0],[1],[2]* | *; Perform cmac operation over <vector length>* |
| | | *; samples* |
| | *idle #cmac0* | *; Stop program fetching until cmac0 is ready* |
| | | |
| *epilog:* | *star [3]* | *; Store accumulator* |

In the example above, the *setcmvl, cmac* and *star* instructions are issued to and executed on the CMAC vector execution unit whereas *ldi, out* and *idle* instructions are executed on the integer core ("core").

The vector length of the vector instructions indicates on how many data words (samples) the vector execution unit should operate on. The vector length may be set in any suitable way, for example one of the following:
1) By dedicated instructions, such as *setcmvl.123* in the example above
2) Carried in the instruction itself, for example according to the format: *cmac.123,* as shown in Fig. 4.
3) Set by a control register, for example according to the format *out r0, cmac_vector*_*length*

The instruction *idle #cmac0* instructs the core program flow controller to stop fetching new instructions until the CMAC0 unit has finished its vector operation. After the idle function releases, and allowing new instructions to be fetched, the "star" instruction is fetched and dispatched to the CMACO vector execution unit. The star instruction instructs the CMAC vector execution unit to store the accumulator to memory.

In the next example, also illustrating prior art, two vector execution units are used. The instruction sequence related to the first vector execution unit is the same as above:

| | | |
|---|---|---|
| *.cmac0* | *;Assume cmac0 is selected* | |
| | | |
| *prolog:* | *;Address setup* | |
| *ldi #0, r0* | | |
| *out r0, cdm0_addr* | | |
| *out r0, cdm1_addr* | | |
| *out r0, cdm2_addr* | | |
| | | |
| *setcmvl.512* | | *; Set vector length to 512* |
| | | |
| *vectorop:* | *cmac [0],[1],[2] ;* | *Perform cmac operation over <vector length>* |
| *idle #cmac0* | | *; samples* |
| | | *; Stop program fetching until cmac0 is ready* |
| | | |
| *epilog:* | *star [3] ;* | *Store accumulator* |

The instruction sequence related to the second vector execution unit is:

| | | |
|---|---|---|
| *.cmac1* | *;Assume cmac1 is selected* | |
| *prolog:* | *;Address setup* | |
| | *ldi #0, r0* | |
| | *out r0, cdm3_addr* | |
| | *out r0, cdm4_addr* | |
| | *out r0, cdm5_addr* | |
| | | |
| | *setcmvl.2048* | *; Set vector length to 2048* |
| | | |
| *vectorop:* | *cmac [0],[1],[2]* | *; Perform cmac operation over <vector length>* |
| | | *; samples* |
| | *idle #cmac1* | *; Stop program fetching until cmac0 is ready* |
| | | |
| *epilog:* | *star [3]* | *; Store accumulator* |

In this case, the second vector execution unit is instructed to perform a vector operation of length 2048, which will take 4 times as long as the operation of length 512 in the first vector execution unit. The first vector execution unit will therefore finish before the second vector execution unit. Since the program memory is instructed, by the instruction *Idle* #*cmac1* to hold the next instruction until the second vector execution unit is finished, it will also not be able to send a new instruction to the first vector execution unit until the second vector execution unit is finished. The first vector execution unit will therefore be inactive for more than 1000 clock cycles because of the *idle* instruction related to the second vector execution unit.

The above example uses two vector execution units. As will be understood, this will be a bigger problem the higher the number of vector execution units, since an idle instruction related to one particular vector execution unit will potentially affect a higher number of other vector execution units. According to the invention this problem is reduced by providing a local queue for each vector execution unit. The local queue is arranged to receive from the program memory in the processor core one or more instructions for its vector execution unit to be executed consecutively, and to forward one instruction at a time to the vector execution.

At the same time, a command is introduced, which instructs the local queue to hold the next instruction until a particular condition is fulfilled. The condition may be, for example that the vector execution unit is finished with the previous command or that the data path is ready to receive a new instruction. For the sake of simplicity, in this document, this new command is referred to as SYNC. The condition may be stated in the instruction word to the SYNC instruction, or it may be read from the control register file or from some other source.

An example of a sequence of instructions using the new SYNC command is given in the following:

| | | |
|---|---|---|
| *.cmac0* | *;Select cmac0 as destination for cmac related instructions* | |
| | *;Address setup* | |
| | *ldi #0, r0* | |
| | *out r0, cdm0_addr* | |
| | *out r0, cdm1_addr* | |
| | *out r0, cdm2_addr* | |
| | *setcmvl.512* | *; Set vector length to 512* |
| | *cmac [0],[1],[2]* | *; Perform cmac operation over 512 samples* |
| | *sync* | *; Stop program queue until cmac is ready* |
| | *star [3]* | *; Store accumulator* |
| | | |
| *cmac1* | *;Select cmac1 as destination for cmac related instructions* | |
| | *;Address setup* | |
| | *ldi #0, r0* | |
| | *out r0, cdm3_addr* | |
| | *out r0, cdm4_addr* | |
| | *out r0, cdm5_addr* | |
| | *setcmvl.2048* | *; Set vector length to 2048* |
| | *cmac [0],[1],[2]* | *; Perform cmac operation over 2048 samples* |
| | *sync* | *; Stop program queue until cmac is ready* |
| | *star [3]* | *; Store accumulator* |

In contrast to the prior art, each of these two sequences of commands may be sent to the local queue of the vector execution unit concerned in one go and stored there while waiting to be sent one command at the time to the instruction decoder within the vector execution unit. As explained above, the command *sync* is provided to halt the local queue until the vector execution unit is finished with the command *cmac,* which is a vector instruction and therefore takes several clock cycles to perform.

Figure 5 illustrates the instruction issue logic in a prior art baseband processor 700 that may be used as a starting point for the present invention. The baseband processor comprises a RISC core 701 having a program memory PM 702 holding instructions for the various execution units of the processor, and a RISC program flow control unit 703. From the program memory 702, instructions are fetched to an issue logic unit 705, which is common to all execution units and arranged to control where to send each specific instruction. The issue logic 705 corresponds to the units Unit-field extraction 508 and issue control 509 of Fig. 3 The issue logic is connected in this case to a number of vector execution units 710, 712, 714 and through a multiplexer 715 to a RISC core + datapath unit 716, the latter being part of the RISC core and corresponding to the units 505, 506, 507 and 510 of Fig. 3. As explained above, in one embodiment the instruction words, comprising the actual instructions, are sent to all execution units, whereas the issue signal corresponding to a particular instruction is sent only to the execution unit that is to execute this instruction. In an alternative embodiment the issue signal is handled locally by each vector execution unit.

Figure 6 illustrates a vector execution unit 710, which may be one of the vector execution units 710, 712, 714 of Fig. 5, according to the prior art. The vector execution unit 710 has a vector controller 720, a vector length counter 721, an instruction register 722 and an instruction decoding unit 723. As in Figure 5 the vector execution unit 710 of Figure 6 receives instructions from the program memory 702, although Fig. 6 has been simplified. The instruction word is the actual instruction and is received in the instruction register 722 and forwarded to the instruction decoder 723. The issue signal is received in the vector controller via the issue logic unit 705 and used to control the execution of the instruction word. If the issue signal is active the instruction is loaded into the instruction register, decoded and executed, otherwise it is discarded. The vector controller 720 also manages the vector length counter 721 and other control signals used in the system as will be discussed below.

Traditionally, during each clock cycle, one instruction intended for one of the execution units, may be fetched from the program memory 702. The unit field in the instruction word may be extracted from the instruction word and used to control to which control unit the instruction is dispatched. For example, if the unit field is "000" the instruction may be dispatched to the RISC data-path. This may cause the issue logic 705 to allow the instruction word to pass through multiplexer 715 into the RISC core 716 (not shown in Fig. 6), while no new instructions are loaded into the vector execution units this cycle. If however, the unit field held any other value, the issue logic 705 may enable the corresponding instruction issue signal to the vector execution unit for which it is intended. Then the vector controller 720 in the selected vector execution unit lets the instruction word to pass through into the instruction register 722 of said vector execution unit. In that case, a NOP instruction will be sent to the RISC data path instruction register in the RISC core 716.

To handle vector instructions, when an instruction is dispatched to the vector execution units, the vector length field from the instruction word may be extracted and stored in the count register 721. This count register may be used to keep track of the vector length in the corresponding vector instruction, and when to send the flag indicating that the vector execution unit is ready to receive another instruction. When a corresponding vector execution unit has finished the vector operation, the vector controller 720 may cause a signal (flag) to be sent to program flow control 703 (not shown in Fig. 6) to indicate that the unit is ready to accept a new instruction. The vector controller 720 of each vector execution unit 520, 530 (see Fig. 3) may additionally create control signals for prolog and epilog states within the execution unit. Such control signals may control VLU and VSU for vector operations and also manage odd vector lengths, for example.

When the issue logic 705 determines, by decoding the unit field, that a particular instruction should be sent to a particular vector execution unit, the instruction word is loaded from the program memory 702 into the instruction register 722. Also, if the instruction is determined (by the vector controller) to carry a vector length field, the count register 721 is loaded with this value the vector length value. The vector controller 720 decodes parts of the instruction word to determine if the instruction is a vector instruction and carries vector length information. If it is, the vector controller 720 activates a signal for the count register 721 to load a value indicating the vector length into the count register 721. The vector controller 720 also instructs the instruction decoder unit 723 to start decode the instruction and start sending control signals to the datapath 724. The instruction in the instruction register 722 is then decoded by the instruction decoder 723, whose control signals are kept in the control signal register 724 before they are sent to the datapath. The count register 721 keeps track of the number of times the instruction should be repeated, that is the vector length, in a conventional way.

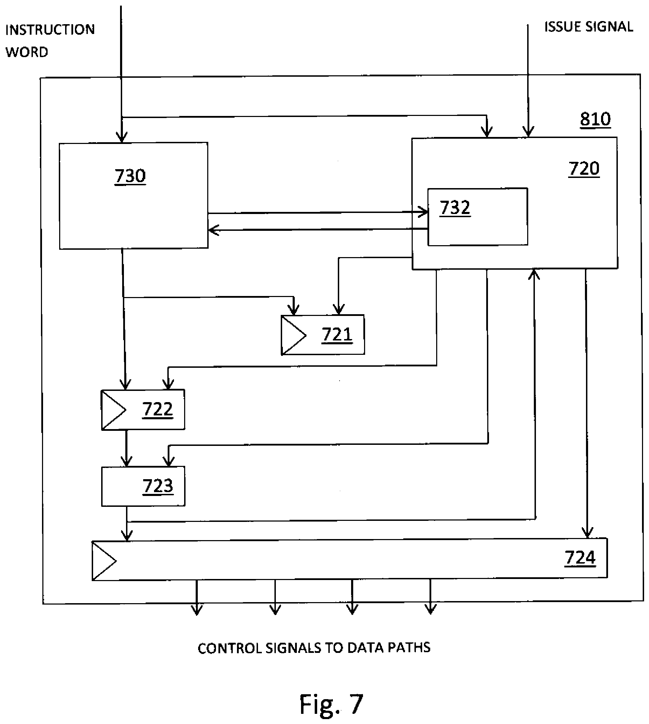

Figure 7 illustrates a vector execution unit 810 according to the invention. The vector execution unit comprises all the elements of the prior art vector execution unit shown in Figure 6 denoted by the same reference numerals. In addition, the vector execution unit according to the invention has a local queue 730 arranged to hold a number of instructions received from the program memory. A queue controller 732 arranged to control the local queue 730 is arranged in the vector control unit 720. The queue 730 and the queue controller 732 are connected to each other to exchange information and commands. For example, the queue controller 732 may comprise a counter arranged to keep track of the number of instructions in the queue 730. Alternatively, the queue itself may keep track of its status and send information indicating that it is full, or empty, or nearly full or empty, to the queue controller 732. Hence, the queue controller 732 holds status information about the local queue 730 and may send control signals to start, halt or empty the local queue 730. The instruction decoder 723 is arranged to inform the vector controller 730 about which instruction is presently being executed.

As explained above, many DSP tasks are implemented as a sequence of instructions, for example a prolog, a vector instruction and an epilog. The vector instructions will run for a number of clock cycles during which time no new command may be fetched. In this case, as explained above, the new SYNC instruction is used to make the local queue hold the next instruction until a particular condition is met. When the queue controller 732 is informed that the instruction decoder 723 has decoded a "sync" instruction, it will set a mode in the queue controller 732 stopping the local queue 730 until the condition is fulfilled. This is normally implemented using the remaining vector length information and information about the current instruction from the instruction decoder. Flags that are sent from the data path 724 to the queue controller 732 can also be used. Typically the condition will be that the processing of the vector instruction is finished so that the instruction decoder 723 in the vector execution unit is ready to process the next instruction.

The local queue 730 could be any kind of queue suitable for holding the desired number of instructions. In one it is a FIFO queue able to hold an appropriate number, for example, 8 instructions.

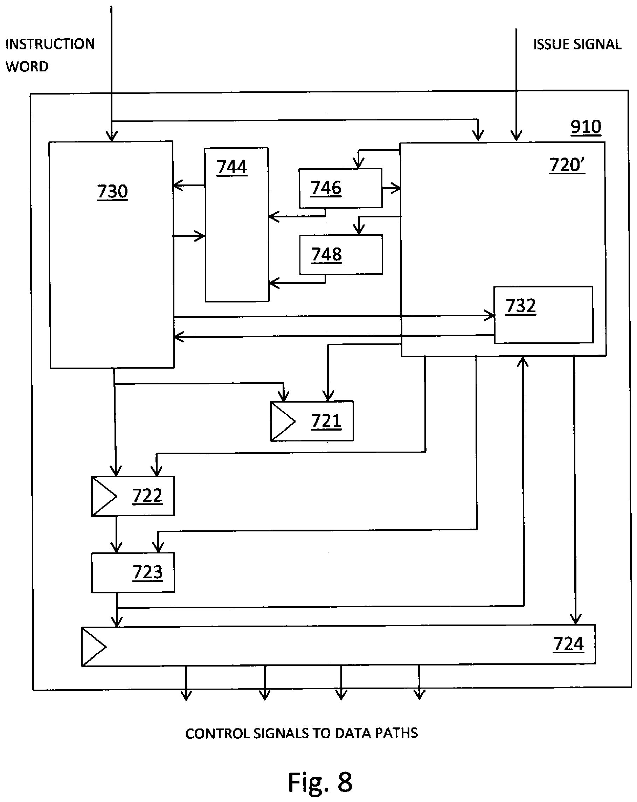

Figure 8 illustrates a vector execution unit 910 according to a preferred embodiment of the invention. The vector execution unit shown in Figure 8 comprises the same units as in Figure 7, interconnected in the same way. In this embodiment, however, the local queue 740 is a cyclic queue suitable for repeating a specified number of instructions. This will be particularly advantageous in implementations where the same sequence of instructions is to be executed a large number of times. The number of times can sometimes exceed 1000. In this case a significant amount of bandwidth can be saved in the control path by not having to send the same instructions from the core unit to the vector execution unit again each time they are to be executed.

As in Figure 7 there is a queue controller 732 arranged in the vector controller 720'. In the embodiment of Figure 8 there is also a buffer manager 744 arranged to keep track of the instructions that are to be repeated, and the number of times an instruction should be repeated. For this purpose there are two registers, which are also controlled by the vector controller 720: a repetition register 746 for storing the number of repetitions of the instruction and an instruction count register 748 arranged to hold the number of instructions that are to be repeated.

As all instructions issued to the vector execution unit pass the queue 740, that is, the cyclic buffer, the buffer will remember the last N (typically 8-16) instructions.
The repetition register 746 is configured to hold the number of repetitions to be executed. The repetition register 746 can be loaded by the control register file or be read from the instruction word issued to the vector execution unit or by any other method.

The instruction count register 748 is configured to hold the number indicating how many instructions in the cyclic buffer 740 that should be included in the repeat loop. The instruction count register can be loaded by the control register file or be read from the instruction word issued to the vector execution unit or by any other method.

When a "repeat" instruction or instruction with a "repeat flag" set is issued to the vector execution unit, the instruction decoder 723 in conjunction with the vector controller 720 instructs the queue controller 732 to dispatch instructions from the cyclic buffer 740 to the instruction register 722.

As in fig. 7, when a "sync" instruction is encountered by the instruction decoder 723, the instruction decoder instructs the queue controller 732 to stop fetching instructions from the local, cyclic, queue until a predefined condition has occurred. This condition is typically that the previous instruction that was fetched from the queue has been completed so that the decoder is ready to receive a new instruction.

Although the local queue 730, 740 and the instruction register 722 are shown in this document as separate entities, it would be possible to combine them to one unit. For example, the instruction register 722 could be integrated as the last element of the local queue.

The buffer manager 744 supervises the operation of the local buffer 740 and manages repetition of the instructions currently stored in the circular buffer, whereas the queue controller 732 manages the start/stop of instruction dispatch from the circular buffer / queue 740.

The buffer manager 744 further manages the repetition register 746 and keeps track of how many repetitions that have been performed. When the number of repetitions specified in the repetition register 746 have been performed, a signal is sent to the vector controller 720' which then can be sent to the sent to program flow control 703 (not shown in Fig. 8) to indicate that the operation is complete.

When the number of repetitions requested has been performed, the behavior of the circular buffer 740 defaults back to queue functionality, storing the last issued instructions so that a new repeat instruction can be started.

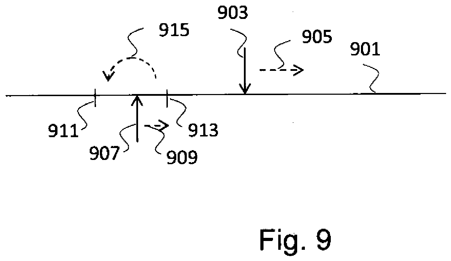

Fig. 9 illustrates the working principle of the local queue according to an embodiment of the invention. The queue itself is represented by a horizontal line 901. A first vertical arrow symbolizes the writing pointer 903, which indicates the position of the queue in which a new instruction is currently being written. A corresponding horizontal arrow 905 indicates the direction in which the writing pointer is moving, towards the right in the drawing.

A second vertical arrow symbolizes the reading pointer 907, which indicates the position of the queue from which an instruction to be executed is currently being read. A corresponding horizontal arrow 909 indicates the direction in which the reading pointer is moving, in the same direction as the writing pointer 903. The distance between the writing pointer 903 and the reading pointer 907 is the current length of the queue, that is, the number of instructions presently in the queue.

In the example of Fig. 9 a sequence of instructions that are to be repeated a number of times has been written to the queue. The start of the sequence and the end of the sequence are indicated by a first 911 and a second 913 vertical line across the horizontal line 901. A backwards arrow 915 indicates that when the reading pointer 907 reaches the end of the sequence of commands indicated by the second vertical line 913, the reading pointer will loop back to the start of the sequence of commands indicated by the first vertical line 911. This will be repeated until the sequence of instructions has been executed the specified number of times.

Control logic (not shown) is arranged to keep track of the number of instructions in the sequence to be iterated, and their position in the queue. This includes, for example:
- The position 911 of the start of the sequence of instructions that are to be repeated
- The position 913 of the end of the sequence of instructions that are to be repeated
- The number of times that the sequence of instructions are to be repeated

Instead of the start and the end of the sequence, the position of either the start or the end of the sequence may be stored together with the length of the sequence, that is, the number of instructions included in the sequence.

## Claims

1. A vector execution unit (203, 205, 520, 530) for use in a digital signal processor (200) having a processor core, said core comprising a program memory arranged to hold instructions for a plurality of execution units, the digital signal processor further comprising a plurality of data memory units arranged to hold data to be used by the vector execution unit, the core, vector execution unit and data memory units being interconnected by a network (244), said vector execution unit being arranged to execute instructions, including vector instructions that are to be performed on multiple data in the form of a vector, comprising an instruction register (722) arranged to receive and store instructions, an instruction decoder (723) arranged to decode instructions stored in the instruction register, and at least one data path controlled by the instruction decoder, said vector execution unit further comprising a vector controller (720, 720') and a count register (721), said vector controller being arranged to determine if an instruction is a vector instruction and, if it is, inform the count register (721), which is arranged to hold the vector length, said vector controller (720, 720') being further arranged control the execution of instructions, said vector execution unit being **characterized in that**
- it comprises a local queue (730) arranged to receive at least a first and a second instruction from the program memory, to provide the first instruction to the instruction register (722) and to hold the second instruction in the local queue (730) until a predefined condition is fulfilled, and that
- the vector controller (720, 720') comprises queue control means (732, 721) arranged to control the local queue.

2. A vector execution unit according to claim 1, further arranged to receive an issue signal and to control the execution of instructions based on this issue signal.

3. A vector execution unit according to claim 1 or 2, wherein the at least one datapath further comprises
a plurality of data paths controlled by the instruction decoder

4. A vector execution unit according to any one of the preceding claims, wherein the local queue (730) is arranged to pause the reading of instructions until the data path is ready to receive and execute another instruction.

5. A vector execution unit according to any one of the preceding claims, wherein the queue control means (732) comprises a queue controller arranged to hold status information related to the queue, such as how full the local queue (730) is, and to control the sending of instructions from the local queue (730) to the vector execution unit (203, 205, 520, 530) for execution.

6. A vector execution unit according to claim 5, wherein the queue controller is arranged to, if a new instruction is sent to the queue and the queue is full, to generate an error message.

7. A vector execution unit according to claim 6, wherein the queue control means (732) are arranged to issue a specific signal instructing the local queue to pause the reading of instructions from the local queue until the condition is fulfilled.

8. A vector execution unit according to any one of the preceding claims, wherein the vector controller (720, 720') is arranged to cause a signal to be sent to a program flow control (703) of the digital signal processor to indicate that the unit is ready to accept a new instruction.

9. A vector execution unit according to any one of the preceding claims, wherein the instruction decoder (723) is arranged to inform the vector controller (720, 720') about the instruction being executed at any given time.

10. A vector execution unit according to any one of the preceding claims, wherein the local queue (730) is a first-in-first-out queue.

11. A digital signal processor (200) comprising:
- a processor core (201) including an integer execution unit (212) configured to execute integer instructions; and
- at least a first and a second vector execution unit (203, 205, 520, 530) separate from and coupled to the processor core (201), wherein each vector execution unit (203, 205) is a vector execution unit according to any one of the preceding claims;
- an on-chip network (244) arranged to provide connections between the processor core and the first and second vector execution unit (203, 205, 520, 530)
- said digital signal processor comprising a program memory (211) arranged to hold instructions for the first and second vector execution unit (203, 205) and issue logic for issuing instructions, including vector instructions, to the first and second vector execution unit.

12. A digital signal processor according to claim 11, wherein the program memory (211) is also arranged to hold instructions for the integer execution unit (212).

13. A digital signal processor according to any one of the claims 11-12, wherein the program memory (211) is arranged in the processor core (201).

14. A baseband communication device suitable for multimode wired and wireless communication, comprising:
- a front-end unit (7) configured to transmit and/or receive communication signals;
- a programmable digital signal processor (3) coupled to the analog front-end unit, wherein the programmable digital signal processor is a digital signal processor according to any one of the claims 11-13.

15. A baseband communication device according to claim 14, wherein the front-end unit (7) is an analog front-end unit arranged to transmit and/or receive radio frequency or baseband signals.

16. A baseband communication device according to claim 14 or 15, said baseband communication device for communication in a wireless communications networks, such as a cellular communications network.

17. A baseband communication device according to claim 14, said baseband communication device being a television receiver.

18. A baseband communication device according to claim 14, said baseband communication device being a cable modem.

## Patentansprüche

1. Vektorausführungseinheit (203, 205, 520, 530) zur Verwendung in einem digitaler Signalprozessor (200) mit einem Prozessorkern, wobei der Kern einen Programmspeicher zum Halten von Anweisungen für eine Vielzahl von Ausführungseinheiten, der digitale Signalprozessor ferner eine Vielzahl von Datenspeichereinheiten umfasst angeordnet, um Daten zu halten, die von der Vektorausführungseinheit zu verwenden sind, wobei der Kern, die Vektorausführungseinheit und die Datenspeichereinheiten durch ein Netzwerk (244) miteinander verbunden sind, wobei die Vektorausführungseinheit Befehle ausführt einschließlich Vektorbefehle, die an mehreren Daten in Form eines Vektors auszuführen sind, umfassend ein Befehlsregister (722) zum Empfangen und Speichern von Befehlen, einen Befehlsdecodierer (723) zum Decodieren von Befehlen, die im Befehlsregister gespeichert sind, und mindestens einen Datenpfad, der durch den Befehlsdecodierer gesteuert wird, wobei die Vektorausführungseinheit ferner eine Vektorcontroller (720, 720') und ein Zählregister (721) umfasst, wobei die Vektorcontroller wobei er angeordnet ist, um zu bestimmen, ob ein Befehl ein Vektorbefehl ist, und falls dies der Fall ist, das Zählregister (721) zu informieren, das eingerichtet ist, die Vektorlänge zu halten, wobei der Vektorcontroller (720, 720') ferner angeordnet ist von Anweisungen, wobei die Vektorausführungseinheit **dadurch gekennzeichnet ist, dass**
- sie umfasst eine lokale Warteschlange (730), die angeordnet ist, um mindestens einen ersten und einen zweiten Befehl von dem Programmspeicher zu empfangen, um den ersten Befehl an das Befehlsregister (722) zu liefern und den zweiten Befehl in der lokalen Warteschlange zu halten (730) bis eine vordefinierte Bedingung erfüllt ist, und das
- der Vektorcontroller (720, 720') umfasst Warteschlangensteuermittel (732, 721), die angeordnet sind, um die lokale Warteschlange zu steuern.

2. Vektorausführungseinheit nach Anspruch 1, die ferner eingerichtet ist, ein Ausgabesignal zu empfangen und die Ausführung von Anweisungen basierend auf diesem Ausgabesignal zu steuern.

3. Vektorausführungseinheit nach Anspruch 1 oder 2, wobei der mindestens eine Datenpfad ferner eine Vielzahl von Datenpfaden umfasst, die durch den Befehlsdecodierer gesteuert warden.

4. Vektorausführungseinheit nach einem der vorhergehenden Ansprüche, wobei die lokale Warteschlange (730) eingerichtet ist, das Lesen von Befehlen anzuhalten, bis der Datenpfad zum Empfangen und Ausführen eines anderen Befehls bereit ist.

5. Vektorausführungseinheit nach einem der vorhergehenden Ansprüche, wobei die Warteschlangensteuermittel (732) eine Warteschlangen-Controller aufweist, die angeordnet ist, um Statusinformationen bezüglich der Warteschlange zu halten, beispielsweise wie voll die lokale Warteschlange (730) ist, und um sie zu steuern das Senden von Befehlen von der lokalen Warteschlange (730) an die Vektorausführungseinheit (203, 205, 520, 530) zur Ausführung.

6. Vektorausführungseinheit nach Anspruch 5, wobei der Warteschlangen-Controller eingerichtet ist, um, falls ein neuer Befehl an die Warteschlange gesendet wird und die Warteschlange voll ist, eine Fehlermeldung zu erzeugen.

7. Vektorausführungseinheit nach Anspruch 6, wobei die Warteschlangensteuermittel (732) angeordnet sind, um ein spezifisches Signal auszugeben, das die lokale Warteschlange anweist, das Lesen von Befehlen von der lokalen Warteschlange anzuhalten, bis die Bedingung erfüllt ist.

8. Vektorausführungseinheit nach einem der vorhergehenden Ansprüche, wobei der Vektorcontroller (720, 720') eingerichtet ist, um zu veranlassen, dass ein Signal an eine Programmflusssteuerung (703) des digitalen Signalprozessors gesendet wird, um die Einheit anzuzeigen ist bereit, eine neue Anweisung zu akzeptieren.

9. Vektorausführungseinheit nach einem der vorhergehenden Ansprüche, wobei der Befehlsdecodierer (723) eingerichtet ist, den Vektorcontroller (720, 720') über den Befehl, der zu irgendeiner gegebenen Zeit ausgeführt wird, zu informieren.

10. Vektorausführungseinheit nach einem der vorhergehenden Ansprüche, wobei die lokale Warteschlange (730) eine First-In-First-Out-Warteschlange ist.

11. Digitaler Signalprozessor (200) mit:
- einen Prozessorkern (201), der eine Integer-Ausführungseinheit (212) enthält, die konfiguriert ist, Integer-Anweisungen auszuführen; und
- mindestens eine erste und eine zweite Vektorausführungseinheit (203, 205, 520, 530), die von dem Prozessorkern (201) getrennt sind und mit diesem gekoppelt sind, wobei jede Vektorausführungseinheit (203, 205) eine Vektorausführungseinheit gemäß irgendeinem ist einer der vorhergehenden Ansprüche;
- ein On-Chip-Netzwerk (244), das angeordnet ist, um Verbindungen zwischen dem Prozessorkern und der ersten und zweiten Vektorausführungseinheit (203, 205, 520, 530) bereitzustellen
- der digitale Signalprozessor einen Programmspeicher (211) aufweist, der angeordnet ist, um Befehle für die erste und zweite Vektorausführungseinheit (203, 205) zu halten und eine Logik zum Ausgeben von Anweisungen einschließlich Vektoranweisungen an die erste und zweite Vektorausführungseinheit auszugeben.

12. Digitaler Signalprozessor nach Anspruch 11, wobei der Programmspeicher (211) auch eingerichtet ist, Anweisungen für die Integer-Ausführungseinheit (212) zu halten.

13. Digitaler Signalprozessor nach einem der Ansprüche 11 bis 12, wobei der Programmspeicher (211) in dem Prozessorkern (201) angeordnet ist.

14. Basisband-Kommunikationsgerät, das für die drahtgebundene und drahtlose Multimode-Kommunikation geeignet ist, umfassend:
- eine Front-End-Einheit (7) zum Senden und / oder Empfangen von Kommunikationssignalen;
- einen programmierbaren Digitalsignalprozessor (3), der mit der Analog-Front-End-Einheit gekoppelt ist, wobei der programmierbare Digitalsignalprozessor ein Digitalsignalprozessor nach einem der Ansprüche 11-13 ist.

15. Basisband-Kommunikationsgerät nach Anspruch 14, wobei die Front-End-Einheit (7) eine analoge Front-End-Einheit ist, die angeordnet ist, um Radiofrequenz- oder Basisbandsignale zu senden und / oder zu empfangen.

16. Basisband-Kommunikationsgerät nach Anspruch 14 oder 15, wobei das Basisband-Kommunikationsgerät zur Kommunikation in einem drahtlosen Kommunikationsnetzwerk, wie einem zellularen Kommunikationsnetzwerk, dient.

17. Basisband-Kommunikationsgerät nach Anspruch 14, wobei das Basisband-Kommunikationsgerät ein Fernsehempfänger ist.

18. Basisband-Kommunikationsgerät nach Anspruch 14, wobei das Basisband-Kommunikationsgerät ein Kabelmodem ist.

## Revendications

1. Unité d'exécution vectorielle (203, 205, 520, 530) destinée à être utilisée dans un processeur de signal numérique (200) ayant un coeur de processeur, ledit coeur comprenant une mémoire de programme conçue pour contenir des instructions pour une pluralité d'unités d'exécution, le processeur de signal numérique comprenant en outre une pluralité d'unités de mémoire de données conçues pour contenir des données à utiliser par l'unité d'exécution vectorielle, le coeur, l'unité d'exécution vectorielle et les unités de mémoire de données étant interconnectés par un réseau (244), ladite unité d'exécution vectorielle étant conçue pour exécuter des instructions, incluant des instructions vectorielles qui sont à effectuer sur de multiples données sous la forme d'un vecteur, comprenant un registre d'instructions (722) conçu pour recevoir et stocker des instructions, un décodeur d'instructions (723) conçu pour décoder des instructions stockées dans le registre d'instructions, et au moins un chemin de données commandé par le décodeur d'instructions, ladite unité d'exécution vectorielle comprenant en outre un dispositif de commande de vecteur (720, 720') et un registre de comptage (721), ledit dispositif de commande de vecteur étant conçu pour déterminer si une instruction est une instruction vectorielle et, si c'est le cas, informer le registre de comptage (721) qui est conçu pour contenir la longueur de vecteur, ledit dispositif de commande de vecteur (720, 720') étant en outre conçu pour commander l'exécution d'instructions, ladite unité d'exécution vectorielle étant **caractérisée en ce que**
- elle comprend une file d'attente locale (730) conçue pour recevoir au moins une première et une seconde instruction en provenance de la mémoire de programme, pour fournir la première instruction au registre d'instructions (722) et contenir la seconde instruction dans la file d'attente locale (730) jusqu'à ce qu'une condition prédéfinie soit remplie, et **en ce que**
- le dispositif de commande de vecteur (720, 720') comprend des moyens de commande de file d'attente (732, 721) conçus pour commander la file d'attente locale.

2. Unité d'exécution vectorielle selon la revendication 1, conçue en outre pour recevoir un signal d'émission et pour commander l'exécution d'instructions sur la base de ce signal d'émission.

3. Unité d'exécution vectorielle selon la revendication 1 ou 2, dans laquelle le au moins un chemin de données comprend en outre une pluralité de chemins de données commandés par le décodeur d'instructions.

4. Unité d'exécution vectorielle selon l'une quelconque des revendications précédentes, dans laquelle la file d'attente locale (730) est conçue pour suspendre la lecture d'instructions jusqu'à ce que le chemin de données soit prêt à recevoir et exécuter une autre instruction.

5. Unité d'exécution vectorielle selon l'une quelconque des revendications précédentes, dans laquelle les moyens de commande de file d'attente (732) comprennent un dispositif de commande de file d'attente conçu pour contenir des informations d'état relatives à la file d'attente, comme la manière dont est remplie la file d'attende locale (730), et pour commander l'envoi d'instructions depuis la file d'attente locale (730) à l'unité d'exécution vectorielle (203, 205, 520, 530) pour exécution.

6. Unité d'exécution vectorielle selon la revendication 5, dans laquelle le dispositif de commande de file d'attente est conçu pour, si une nouvelle instruction est envoyée à la file d'attente et la file d'attente est pleine, générer un message d'erreur.

7. Unité d'exécution vectorielle selon la revendication 6, dans laquelle les moyens de commande de file d'attente (732) sont conçus pour émettre un signal spécifique ordonnant à la file d'attente locale de suspendre la lecture d'instructions de la file d'attente locale jusqu'à ce que la condition soit remplie.

8. Unité d'exécution vectorielle selon l'une quelconque des revendications précédentes, dans laquelle le dispositif de commande de vecteur (720, 720') est conçu pour amener un signal à être envoyé à une commande de flux de programme (703) du processeur de signal numérique pour indiquer que l'unité est prête à accepter une nouvelle instruction.

9. Unité d'exécution vectorielle selon l'une quelconque des revendications précédentes, dans laquelle le décodeur d'instructions (723) est conçu pour informer le dispositif de commande de vecteur (720, 720') que l'instruction est exécutée à un quelconque instant donné.

10. Unité d'exécution vectorielle selon l'une quelconque des revendications précédentes, dans laquelle la file d'attente locale (730) est une file d'attente premier entré-premier sorti.

11. Processeur de signal numérique (200) comprenant:
- un coeur de processeur (201) comprenant une unité d'exécution d'entiers (212) configurée pour exécuter des instructions entières; et
- au moins une première et une seconde unité d'exécution vectorielle (203, 205, 520, 530) séparées du coeur de processeur (201) et couplées à celui-ci, chaque unité d'exécution vectorielle (203, 205) étant une unité d'exécution vectorielle selon l'une quelconque des revendications précédentes;
- un réseau sur puce (244) conçu pour fournir des connexions entre le coeur de processeur et les première et seconde unités d'exécution vectorielle (203, 205, 520, 530)
- ledit processeur de signal numérique comprenant une mémoire de programme (211) conçue pour contenir des instructions pour les première et seconde unités d'exécution vectorielle (203, 205) et une logique d'émission pour délivrer des instructions, incluant des instructions vectorielles, aux première et seconde unités d'exécution vectorielle.

12. Processeur de signal numérique selon la revendication 11, dans lequel la mémoire de programme (211) est également conçue pour contenir des instructions pour l'unité d'exécution d'entiers (212).

13. Processeur de signal numérique selon l'une quelconque des revendications 11 à 12, dans lequel la mémoire de programme (211) est agencée dans le coeur de processeur (201).

14. Dispositif de communication en bande de base adapté à une communication câblée et sans fil multimode, comprenant:
- une unité d'extrémité avant (7) configurée pour émettre et/ou recevoir des signaux de communication;
- un processeur de signal numérique programmable (3) couplé à l'unité d'extrémité avant analogique, dans lequel le processeur de signal numérique programmable est un processeur de signal numérique selon l'une quelconque des revendications 11 à 13.

15. Dispositif de communication en bande de base selon la revendication 14, dans lequel l'unité d'extrémité avant (7) est une unité d'extrémité avant analogique conçue pour émettre et/ou recevoir des signaux de fréquence radio ou en bande de base.

16. Dispositif de communication en bande de base selon la revendication 14 ou 15, ledit dispositif de communication en bande de base étant destiné à une communication dans des réseaux de communication sans fil, tels qu'un réseau de communication cellulaire.

17. Dispositif de communication en bande de base selon la revendication 14, ledit dispositif de communication en bande de base étant un récepteur de télévision.

18. Dispositif de communication en bande de base selon la revendication 14, ledit dispositif de communication en bande de base étant un modem câble.
